# EUROPEAN PATENT APPLICATION

(11) **EP 3 819 491 A1**
(43) Date of publication of application: **12.05.2021**
(21) Application number: 19275121.2
(22) Date of filing: 11.11.2019
(51) Int. Cl.: F02K 9/84, F02K 9/88, F42B 10/66

(54) **EXHAUST NOZZLE ASSEMBLY AND METHOD OF CONTROLLING AN AIR VEHICLE**

(71) Applicant: MBDA UK Limited, Stevenage, Hertfordshire SG1 2DA (GB)
(72) Inventor: The designation of the inventor has not yet been filed
(74) Representative: BAE SYSTEMS plc Group IP Department

(57) **Abstract**

The invention provides an exhaust nozzle assembly 200 for an air vehicle, comprising an assembly body 202, defining one or more openings 300 for receiving exhaust, and a plurality of nozzles 210a, 210b, 210c, 210d, each nozzle being arranged to receive exhaust gases at an entrance 240 of the nozzle, and exhaust those exhaust gases from an exit 250 of the nozzle, wherein at least one of the plurality of nozzles is rotatably mounted to the assembly body and rotatable with respect to the assembly body between a first position 214 and a second position 217, wherein a variation of the angle 216 of a nozzle axis at the exit of the rotatably mounted nozzle, between the first and second positions, is at least 25 degrees. The invention also provides other exhaust nozzle assemblies, air vehicles and methods of manufacturing or controlling an air vehicle.

## Description

### BACKGROUND OF THE INVENTION

The present disclosure relates to an exhaust nozzle assembly.

The present invention concerns an exhaust nozzle assembly for an air vehicle. More particularly, but not exclusively, this invention concerns an exhaust nozzle assembly for an air vehicle, the exhaust nozzle assembly comprising an assembly body, defining one or more openings for receiving exhaust gases into the assembly body, and a plurality of nozzles mounted on the assembly body and in fluid connection with the one or more openings, such that each nozzle is arranged to receive exhaust gases at an entrance of the nozzle, and exhaust those exhaust gases from an exit of the nozzle, and wherein each nozzle defines a nozzle axis extending from the nozzle entrance to the nozzle exit, and wherein each nozzle is arranged to direct the received exhaust gases in a direction corresponding to the nozzle axis at the exit of the nozzle.

The invention also concerns air vehicles and methods of manufacturing or controlling an air vehicle.

Air vehicles often operate at high altitudes. At these high altitudes, the air lacks density and therefore conventional aerodynamic control surfaces (such as moveable surfaces) may be rendered ineffective as a means for controlling the flight path of the air vehicle. An alternative approach is to use a nozzle system to generate the forces and moments necessary to control the trajectory of the air vehicle.

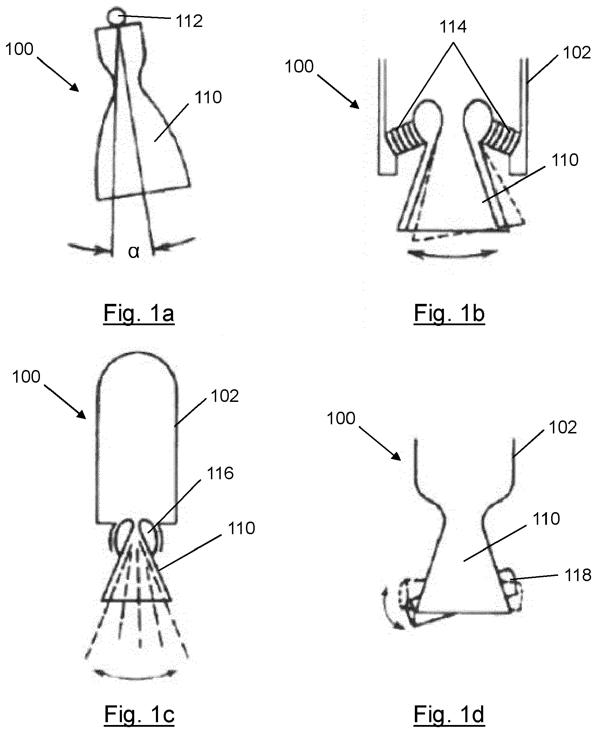

Example nozzle assemblies of the prior art will now be described with reference to Figures 1a to 1h. Figures 1a to 1h show a side cross-sectional views of different exhaust nozzle assemblies, each labelled as 100.

In Figure 1a, the nozzle assembly 100 comprises a single nozzle 110. The nozzle 110 is mounted via a gimbal or hinge 112. The gimbal or hinge 112 allows the nozzle 110 to swivel with respect to a central axis by an angle of deflection α. The angle of deflection α can have a value of between 0° and 10° (i.e. a maximum deflection angle of 10° from the centre-line). This allows the nozzle 110 to change its direction in two dimensions (i.e. with two degrees of freedom) with respect to the rest of the assembly 100, allowing the generation of lateral thrust, when expelling exhaust gases in use.

In Figure 1b, the nozzle assembly 100 again comprises a single nozzle 110. The nozzle 110 is mounted to a casing 102 via a flexible laminated bearing 114. The flexible laminated bearing 114 is a ring of alternate layers of molded elastomer and spherically formed sheet metal. The maximum deflection angle of the nozzle 110 enabled by this embodiment is again, approximately 10° from the central axis of the casing 102. The nozzle 110 can change its direction in two dimensions (i.e. with two degrees of freedom) with respect to the rest of the assembly 100.

In Figure 1c, the nozzle assembly 100 comprises a nozzle 110 and a casing 102. The nozzle 110 is rotatably mounted to the casing 102 with a rotary ball joint 116. The nozzle can be rotated by the rotary ball joint 116 to modestly change the orientation of the nozzle in two dimensions (i.e. with two degrees of freedom) with respect to the casing.

In Figure 1d, the nozzle assembly 100 comprises a nozzle 110 and a casing 102. The nozzle 110 is fixedly mounted to the casing 102. The nozzle 110 comprises a jetavator 118. The jetavator 118 is a rotating aerofoil shaped collar that is gimballed near the nozzle 110 exit. The jetavator 118 is rotated to impede the flow of exhaust gases exiting the nozzle 110 in a region near a portion of its circumference, while allowing unimpeded flow of exhaust gases trough a centre portion of the nozzle. This changes the direction of exhaust gases exiting the nozzle 110, which in turn causes the flight direction to change. The jetavator 118 can be rotated to change its direction in two dimensions (i.e. with two degrees of freedom) with respect to the rest of the assembly 100.

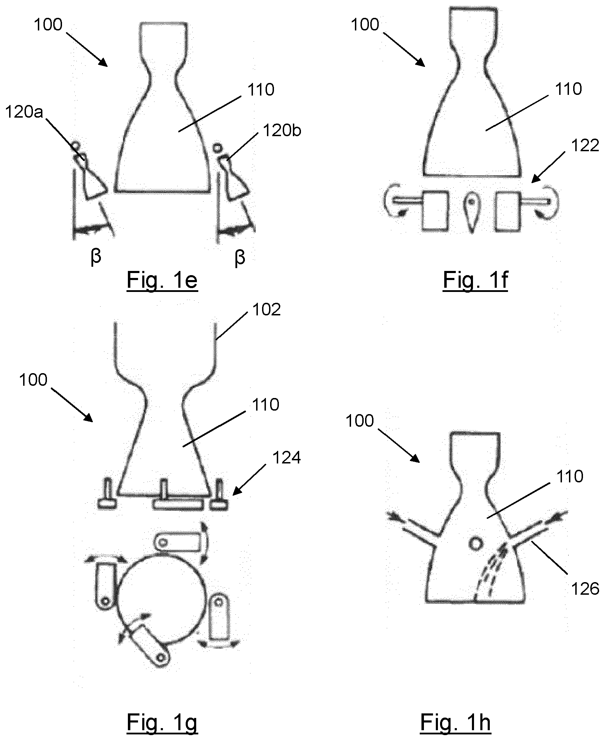

In Figure 1e, the nozzle assembly 100 comprises a main nozzle 110, and a pair of auxiliary nozzles 120a, 120b. The auxiliary nozzles 120a, 120b are mounted via gimbals or hinges (similar to the example of Figure 1a). By rotating the auxiliary nozzles 120a, 120b lateral thrust can be generated. The auxiliary nozzles 120a, 120b have a maximum deflection angle β of about 20° and are able to change their direction in two dimensions (i.e. with two degrees of freedom) with respect to the rest of the assembly 100.

Figure 1f shows a nozzle assembly 100 comprising a nozzle 110 and a set of jet vanes 122. The set of jet vanes 122 comprises four rotating, heat resistant aerodynamic vanes in the flow path of the exhaust gases exiting the nozzle 110.

In a similar manner to Figure If, Figure 1g shows a set of jet tabs 124. The set of jet tabs 124 comprises four paddles that rotate in and out of the flow path of exhaust gases exiting the nozzle 110. The arrangement of the paddles can be used to create a net lateral thrust is generated.

Figure 1h shows a nozzle assembly 100 comprising a single nozzle 110. The nozzle 110 comprises a side injection port 126. The side injection port 126 injects secondary fluid into one side of the nozzle 110, causing generation of lateral thrust.

One of the problems associated with the assemblies of the prior art is that the net axial thrust of the nozzle assemblies cannot be significantly altered. Substantially all of the thrust in the assemblies of the prior art, even when there is maximum deflection, is still in the axial direction. Furthermore, rotation of the nozzles in two dimensions, with two axes of freedom, results in complicated control systems for controlling the net direction of the thrust. In addition, the net lateral thrust of the assemblies of the prior art is not very high, even when at maximum deflection angles, and as such the assemblies of the prior art have low manoeuvrability and agility.

The present disclosure seeks to mitigate the above-mentioned problems. Alternatively or additionally, the present disclosure seeks to provide an improved exhaust nozzle assembly.

### SUMMARY OF THE INVENTION

The present disclosure provides, according to a first aspect, an exhaust nozzle assembly for an air vehicle, the exhaust nozzle assembly comprising an assembly body, defining one or more openings for receiving exhaust gases into the assembly body, and a plurality of nozzles mounted on the assembly body and in fluid connection with the one or more openings, such that each nozzle is arranged to receive exhaust gases at an entrance of the nozzle, and exhaust those exhaust gases from an exit of the nozzle, and wherein each nozzle defines a nozzle axis extending from the nozzle entrance to the nozzle exit, and wherein each nozzle is arranged to direct the received exhaust gases in a direction corresponding to the nozzle axis at the exit of the nozzle, wherein at least one of the plurality of nozzles is rotatably mounted to the assembly body and rotatable with respect to the assembly body between a first position and a second position, wherein a variation of the angle of the nozzle axis at the exit of the rotatably mounted nozzle, between the first and second positions, is at least 25 degrees.

The nozzle axis is defined as the line running from an entrance plane of the nozzle (where exhaust gases are received by the nozzle) to an exit plane of nozzle (where exhaust gases are exhausted from the nozzle). The nozzle axis corresponds to a central flow point along the nozzle and at the entrance and exit planes, i.e. where the centre of the exhaust gas flow is. In other words, the nozzle axis corresponds to the mean flow direction along the nozzle. For example, even when fixed in one position, a nozzle may exhaust gases in a number of different directions. However, the mean flow direction of the total flow corresponds to the nozzle axis. For a symmetrical nozzle (i.e. a nozzle when viewed end-on, i.e. from the entrance or exit of the nozzle, that is rotationally symmetrical), the nozzle axis is generally the axis of rotational symmetry.

The nozzle may receive exhaust gases flowing in a first direction (i.e. mean flowing direction). The nozzle may exhaust those gases in a second direction (i.e. mean flowing direction). The first direction and the second direction may substantially be the same. In other words, the nozzle axis itself does not change the mean direction of the flow. Here, the rotational movement of the nozzle may cause the angle at the entrance of the nozzle to vary and thus vary the first direction (and second direction). Alternatively, the first and second directions may be substantially different. In other words, the nozzle axis itself changes the direction along the nozzle and hence changes the direction of the exhaust flow along the nozzle.

The exhaust gases may, in use, come from an engine of the air vehicle, and may be passed to the assembly body through the one or more openings. The assembly body may comprise a chamber for receiving the exhaust gases from the one (or more) opening(s). Each nozzle may be in fluid connection with the chamber. In other words, the chamber acts as a central plenum for the nozzles. Each nozzle may be in fluid connection with the chamber through a branch line, fluidly connected between the chamber and the nozzle.

Each branch line from the chamber may comprise a nozzle chamber, rotatable (about a rotational axis) with the nozzle. The nozzle chamber may define a nozzle chamber axis (corresponding to the mean flow direction along the nozzle chamber, in a similar way to the definition of the nozzle axis). This axis may comprise a substantially straight line. The axis may correspond to the rotational axis of the nozzle chamber. Hence, rotation of the nozzle chamber does not affect the flow direction through the nozzle chamber. However, rotation of the nozzle chamber may affect the flow direction received by the nozzle (at the entrance). For example, the entrance of the nozzle receives exhaust gases from the nozzle chamber and the position of the nozzle entrance varies (in relation to the nozzle chamber axis) depending on the rotation position of the nozzle.

Such a rotatably mounted nozzle, enables the angle of the exhausted gases to be varied by at least 25 degrees. This enables a versatile arrangement where the exhaust nozzle assembly is able to provide an overall thrust (provided by the exhausted gases) to the air vehicle in a wide variety of directions.

In particular, with a high angle variation, it is possible to provide the air vehicle with a configuration where the overall thrust provided is substantially zero in a number of lateral directions (lateral to the air vehicle direction). It may, alternatively or additionally, be possible to provide the air vehicle with a configuration where the overall thrust provided is substantially zero in the air vehicle direction. Here, the air vehicle direction may be defined as the axis of the air vehicle and/or the axis along which movement occurs when the exhaust nozzle assembly is in a maximum thrust position.

This enables the nozzle assembly to brake the air vehicle, thereby enabling the air vehicle to have an optimised velocity profile over its flight envelope. This is particularly useful where there might be Mach number (speed), altitude and/or time constraints. Such a nozzle assembly can be optimised over the whole flight envelope, rather than just being optimised for the most demanding operating point (i.e. constraint) of the flight envelope. This means the efficiency of the air vehicle is dramatically improved, as this removes the sub-optimal nature of a large part of the flight envelope.

A maximum thrust position of the assembly may be defined as the position and/or configuration of the rotatably mounted nozzle(s) that provides a maximum overall (net) thrust to the air vehicle (i.e. taking into account all of the nozzles, and the resulting exhaust flow direction from each nozzle, of the exhaust nozzle assembly).

Preferably, the variation of the angle of the nozzle axis at the exit of the rotatably mounted nozzle, between the first and second positions, is at least 45 degrees.

This provides greater flexibility.

More preferably, the variation of the angle of the nozzle axis at the exit of the rotatably mounted nozzle, between the first and second positions, is at least 60 degrees, 70 degrees, or more preferably at least 80 degrees, 90 degrees, 120 degrees or 150 degrees.

This provides even greater flexibility.

In particular, when the variation in angle is substantially 90 degrees or more, combined with having 2 or more nozzles that are so rotatably mounted, it is possible to angle the nozzles such that there is zero net thrust, in the air vehicle direction/axis, to be provided to the air vehicle. For example, with 2 nozzles that are able to be rotated by 90 degrees from a maximum thrust position, a first nozzle may act in a first lateral direction (orthogonal to the maximum thrust direction and air vehicle direction/axis), and a second nozzle may act in a second opposite lateral direction. If the nozzles are similarly sized and have similar flow amounts, this would provide substantially zero thrust in the maximum thrust direction and/or air vehicle direction/axis. If the two nozzles are spaced apart on a notional line, either side of a central axis, and are directed in a direction transverse to the notional line, this would result in a rotational thrust, acting to rotate the air vehicle about the central axis. When the variation in angle is substantially 90 degrees or more, combined with having 4 or more nozzles that are so rotatably mounted, it is possible to angle the nozzles such that there is zero net thrust, in any direction, and zero rotational thrust, to be provided to the air vehicle. For example, with 4 nozzles that are able to be rotated by 90 degrees from a maximum thrust position, a first nozzle may act in a first lateral direction (orthogonal to the maximum thrust direction and air vehicle direction/axis), and a second nozzle may act in a second opposite lateral direction. A third nozzle may act in a third lateral direction (orthogonal to the maximum thrust direction and air vehicle direction/axis and also orthogonal to the first and second lateral directions). A fourth nozzle may act in a fourth lateral direction (opposite to the third lateral direction). If the nozzles are similarly sized and have similar flow amounts, this would provide substantially zero thrust in the maximum thrust direction and/or air vehicle direction/axis, and also substantially zero rotational thrust. Hence, there would be no net thrust to act to rotate the air vehicle about the central axis.

Even more preferably, the variation of the angle of the nozzle axis at the exit of the rotatably mounted nozzle, between the first and second positions, is substantially 180 degrees.

This provides greater flexibility in being able to achieve the various zero thrust configurations described above, from other configurations, for example where a specific overall thrust angle was demanded. For example, if the or each nozzle is able to rotate by substantially 180 degrees, the nozzles can be used to achieve a required air vehicle thrust direction (e.g. at a heading of 20 degrees to the right or left) and from that configuration be moved to provide a zero overall thrust configuration, more efficiently (i.e. the nozzle can move further right or further left, as most appropriate).

Preferably, the nozzle has a maximum thrust position and wherein the first position is on one side of the maximum thrust position and the second position is on an opposite side of the maximum thrust position.

A nozzle maximum thrust position may be defined as the position of the rotatably mounted nozzle that provides a maximum thrust from the nozzle to the air vehicle in a forwards direction of the air vehicle. Generally, this correspond to an air vehicle axis and/or an air vehicle direction, along which movement occurs when the exhaust nozzle assembly, as a whole, is in a maximum thrust position. In other words, it is likely that the angle of one nozzle in its maximum thrust position, is substantially aligned, or as closely aligned as possible, with the angle of other nozzles in their maximum thrust positions.

More preferably, the first position is at a first angle to the maximum thrust position and wherein the second position is substantially at the first angle to the maximum thrust position.

In other words, the first and second positions are located symmetrically about the maximum thrust position.

The first angle (i.e. the angle of the first and/or second position from the maximum thrust position) may be at least 12.5 degrees, 22.5 degrees, 30 degrees, 35 degrees, 40 degrees, 45 degrees, 60 degrees, 75 degrees, or may be substantially 90 degrees.

These first angles correspond to a variation angle (i.e. the variation of the angle of the nozzle axis at the exit of the rotatably mounted nozzle, between the first and second positions) of double the first angle.

Preferably, the rotatably mounted nozzle is rotatably mounted about an axis of rotation and wherein the axis of rotation of the nozzle is transverse to the nozzle axis.

In particular, the axis of rotation of the nozzle may be transverse to the nozzle axis at the entrance to the nozzle. The rotation axis may also be transverse to the air vehicle direction/axis and/or maximum thrust direction of the nozzle/assembly.

This provides for an efficient variation of the nozzle axis. For example, less angle variation about the rotational axis is required to achieve a required change in direction of the exhaust flow.

More preferably, the axis of rotation of the nozzle is substantially orthogonal to the nozzle axis.

In particular, the axis of rotation of the nozzle may be substantially orthogonal to the nozzle axis at the entrance to the nozzle. The rotation axis may also be substantially orthogonal to the air vehicle direction/axis and/or maximum thrust direction of the nozzle/assembly.

This provides for an even more efficient variation of the nozzle axis. For example, less angle variation about the rotational axis is required to achieve a required change in direction of the exhaust flow.

Preferably, the rotatably mounted nozzle is rotatably mounted about a single axis of rotation.

In other words, the nozzle is only able to be rotatable about a single axis of rotation. This simplifies the control of the nozzle assembly.

Preferably, the rotatably mounted nozzle is rotatably mounted about an axis of rotation and wherein the rotatably mounted nozzle is symmetrical such that it is rotationally symmetrical about the axis of rotation of the nozzle.

In other words, the nozzle, when viewed end-on, i.e. from the entrance or exit of the nozzle, is rotationally symmetrical about the nozzle axis. This provides a nozzle that is able to provide symmetrical exhaust flow around the nozzle axis. Hence, rotation of the nozzle about its nozzle axis does not vary the exhaust flow direction.

Preferably, at least two of the plurality of the nozzles is rotatably mounted to the assembly body and rotatable with respect to the assembly body between a first position and a second position, wherein a variation of the angle of the nozzle axis at the exit of each rotatably mounted nozzle, between the first and second positions, is at least 25 degrees.

It may be that each of the plurality of the nozzles is rotatably mounted in such a way.

The first position of one nozzle may, and is likely to be, different to the first position of other nozzles. Similarly, the second position of one nozzle may, and is likely to be, different to the second position of other nozzles. In other words, each nozzle has its own first and second position.

Each rotatably mounted nozzle may have any of, and any combination of, the features of the first rotatably mounted nozzle, described above.

The plurality of (rotatably mounted) nozzles may be evenly distributed about a central axis of the exhaust nozzle assembly. This central axis may correspond to an air vehicle axis/direction and/or a maximum thrust direction.

More preferably, the assembly comprises four such rotatably mounted nozzles; a first nozzle being rotatably mounted about a first axis of rotation, a second nozzle being rotatably mounted about a second axis of rotation, a third nozzle being rotatably mounted about a third axis of rotation, and a fourth nozzle being rotatably mounted about a fourth axis of rotation, wherein the first and third axes of rotation are substantially parallel to each other and wherein the second and fourth axes of rotation are substantially parallel to each other and wherein the first and third axes are substantially orthogonal to the second and fourth axes.

This enables the nozzles to be efficiently configured so that there is a zero thrust configuration, where there is no overall thrust or rotational thrust, and also a maximum thrust configuration.

The axes may pass through the central axis.

The plurality of nozzles may be substantially the same size and shape. The plurality of nozzles may produce similar thrust/exhaust flow properties.

Preferably, the plurality of rotatably mounted nozzles are rotatably moveable independently of each other.

According to a second aspect of the invention there is also provided an exhaust nozzle assembly for an air vehicle, the exhaust nozzle assembly comprising an assembly body, defining one or more openings for receiving exhaust gases into the assembly body, and a plurality of nozzles mounted on the assembly body and in fluid connection with the one or more openings, such that each nozzle is arranged to receive exhaust gases at an entrance of the nozzle, and exhaust those exhaust gases from an exit of the nozzle, and wherein each nozzle defines a nozzle axis extending from the nozzle entrance to the nozzle exit, and wherein each nozzle is arranged to direct the exhaust gases received in a direction corresponding to the nozzle axis at the exit of the nozzle, wherein the plurality of nozzles comprises at least four nozzles, each rotatably mounted to the assembly body and rotatable with respect to the assembly body between a first position and a second position.

This provides greater flexibility (than, for example two rotatably mounted nozzles) to provide different nozzle configurations, including a zero thrust configuration, and a maximum thrust configuration.

For example, with 4 nozzles, especially if able to be rotated by 90 degrees from a maximum thrust position, a first nozzle may act in a first lateral direction (orthogonal to the maximum thrust direction and air vehicle direction/axis), and a second nozzle may act in a second opposite lateral direction. A third nozzle may act in a third lateral direction (orthogonal to the maximum thrust direction and air vehicle direction/axis and also orthogonal to the first and second lateral directions). A fourth nozzle may act in a fourth lateral direction (opposite to the third lateral direction). If the nozzles are similarly sized and have similar flow amounts, this would provide substantially zero thrust in the maximum thrust direction and/or air vehicle direction/axis, and also substantially zero rotational thrust, acting to rotate the air vehicle about the central axis.

The first nozzle may be rotatably mounted about a first axis of rotation, a second nozzle may be rotatably mounted about a second axis of rotation, a third nozzle may be rotatably mounted about a third axis of rotation, and a fourth nozzle may be rotatably mounted about a fourth axis of rotation, wherein the first and third axes of rotation are substantially parallel to each other and wherein the second and fourth axes of rotation are substantially parallel to each other and wherein the first and third axes are substantially orthogonal to the second and fourth axes.

This enables the nozzles to be efficiently configured so that there is a zero thrust configuration, where there is no overall thrust or rotational thrust, and also a maximum thrust configuration.

The axes may pass through the central axis.

The plurality of nozzles may be substantially the same size and shape. The plurality of nozzles may produce similar thrust/exhaust flow properties.

The plurality of rotatably mounted nozzles may be rotatably moveable independently of each other.

The variation of the angle of the nozzle axes at the exit of the rotatably mounted nozzles, between the first and second positions may be at least 45 degrees, 60 degrees, preferably at least 70 degrees, more preferably at least 80 degrees, 90 degrees, 120 degrees or 150 degrees, or may be substantially 180 degrees.

Each rotatably mounted nozzle may be rotatably mounted about a single axis of rotation.

According to a third aspect of the invention there is also provided an exhaust nozzle assembly for an air vehicle, the exhaust nozzle assembly comprising an assembly body, defining one or more openings for receiving exhaust gases into the assembly body, and a plurality of nozzles mounted on the assembly body and in fluid connection with the one or more openings, such that each nozzle is arranged to receive exhaust gases at an entrance of the nozzle, and exhaust those exhaust gases from an exit of the nozzle, and wherein each nozzle defines a nozzle axis extending from the nozzle entrance to the nozzle exit, and wherein each nozzle is arranged to direct the exhaust gases received in a direction corresponding to the nozzle axis at the exit of the nozzle, wherein at least one of the plurality of nozzles is rotatably mounted to the assembly body and rotatable with respect to the assembly body about an axis of rotation and wherein the axis of rotation is substantially orthogonal to the nozzle axis.

The nozzle axis is defined as the line running from an entrance plane of the nozzle (where exhaust gases are received by the nozzle) to an exit plane of nozzle (where exhaust gases are exhausted from the nozzle). The nozzle axis corresponds to a central flow point along the nozzle and at the entrance and exit planes, i.e. where the centre of the exhaust gas flow is. In other words, the nozzle axis corresponds to the mean flow direction along the nozzle. For example, even when fixed in one position, a nozzle may exhaust gases in a number of different directions. However, the mean flow direction of the total flow corresponds to the nozzle axis. For a symmetrical nozzle (i.e. a nozzle when viewed end-on, i.e. from the entrance or exit of the nozzle, that is rotationally symmetrical), the nozzle axis is generally the axis of rotational symmetry.

In particular, the axis of rotation of the nozzle may be substantially orthogonal to the nozzle axis at the entrance to the nozzle. The rotation axis may also be substantially orthogonal to the air vehicle direction/axis and/or maximum thrust direction of the nozzle/assembly.

This provides for an efficient variation of the nozzle axis. For example, less angle variation about the rotational axis is required to achieve a required change in direction of the exhaust flow.

The rotatably mounted nozzle may be rotatably mounted about a single axis of rotation.

The exhaust nozzle assembly may comprise four such rotatably mounted nozzles; a first nozzle being rotatably mounted about a first axis of rotation, which is substantially orthogonal to the nozzle axis of the first nozzle at its entrance, a second nozzle being rotatably mounted about a second axis of rotation, which is substantially orthogonal to the nozzle axis of the second nozzle at its entrance, a third nozzle being rotatably mounted about a third axis of rotation, which is substantially orthogonal to the nozzle axis of the third nozzle at its entrance, and a fourth nozzle being rotatably mounted about a fourth axis of rotation, which is substantially orthogonal to the nozzle axis of the fourth nozzle at its entrance, wherein the first and third axes of rotation are substantially parallel to each other and wherein the second and fourth axes of rotation are substantially parallel to each other and wherein the first and third axes are substantially orthogonal to the second and fourth axes.

This enables the nozzles to be efficiently configured so that there is a zero thrust configuration, where there is no overall thrust or rotational thrust, and also a maximum thrust configuration.

The axes may pass through the central axis.

The plurality of nozzles may be substantially the same size and shape. The plurality of nozzles may produce similar thrust/exhaust flow properties.

According to a fourth aspect of the invention there is also provided an air vehicle comprising the exhaust nozzle assembly as described above.

Preferably, the air vehicle is an autonomous air vehicle, such as a rocket or munition.

In other words, the air vehicle is not controlled by a pilot of the vehicle and instead may be controlled remotely, or may be provided with control instructions prior to launch.

According to a fifth aspect of the invention there is also provided a method of manufacturing or controlling an air vehicle including the step of providing an exhaust nozzle assembly as described above.

According to a sixth aspect of the invention there is also provided a method of controlling an air vehicle comprising the steps of providing an air vehicle with a nozzle, the nozzle receiving exhaust gases from an engine of the air vehicle, exhausting the exhaust gases from an exit of the nozzle, when the nozzle is in a first position, rotating the nozzle from the first position to a second position, through an angle of at least 25 degrees, and exhausting the exhaust gases from the exit of the nozzle, when the nozzle is in the second position.

According to a seventh aspect of the invention there is also provided a method of controlling an air vehicle comprising the steps of providing an air vehicle having at least four nozzles, each of the four nozzles receiving exhaust gases from an engine of the air vehicle, exhausting the exhaust gases from an exit of each of the four nozzles, when each nozzle is in a first position, rotating each nozzle from its first position to a second position, and exhausting the exhaust gases from the exit of each of the four nozzle, when each nozzle is in its second position.

According to an eighth aspect of the invention there is also provided a method of controlling an air vehicle comprising the steps of providing an air vehicle with a nozzle, the nozzle receiving exhaust gases from an engine of the air vehicle, exhausting the exhaust gases from an exit of the nozzle, when the nozzle is in a first position, rotating the nozzle from the first position to a second position, about an axis of rotation that is substantially orthogonal to a nozzle axis, and exhausting the exhaust gases from the exit of the nozzle, when the nozzle is in the second position.

It will of course be appreciated that features described in relation to one aspect of the present disclosure may be incorporated into other aspects of the present disclosure. For example, the method of the present disclosure may incorporate any of the features described with reference to the apparatus of the present disclosure and vice versa.

### DESCRIPTION OF THE DRAWINGS

Embodiments of the present disclosure will now be described by way of example only with reference to the accompanying schematic drawings of which:
Figures 1a to 1h show side cross-sectional views of a nozzle assembly according to examples of the prior art;
Figure 2a shows a perspective view of a nozzle assembly in a maximum axial thrust configuration, according to a first embodiment of the invention;
Figure 2b shows a perspective view of the nozzle assembly of Figure 2a, in a minimum axial thrust configuration;
Figure 2c shows a perspective view of the nozzle assembly of Figure 2a in a maximum upwards thrust configuration;
Figure 2d shows a perspective view of the nozzle assembly of Figure 2a in a maximum upwards and sideways thrust configuration;
Figure 2e shows a cross-sectional side view of the nozzle assembly of Figure 2a;
Figure 3 shows a perspective cut-away internal view of the nozzle assembly of Figures 2a to 2d;
Figure 4a shows a cross-sectional side view of a nozzle assembly, according to a second embodiment of the invention; and
Figure 4b shows a perspective view of the nozzle assembly of Figure 4a.

### DETAILED DESCRIPTION

The present disclosure will be more fully understood and further advantages will become apparent when reference is made to the following detailed description of embodiments of the present invention, wherein like reference numerals denote similar elements.

Where reference is made in the following description to a nozzle 'pointing' in a direction, this is defined as the direction of the net vector of exhaust gases exiting the distal end of the nozzle (i.e. the direction of the nozzle axis at the exit of the nozzle).

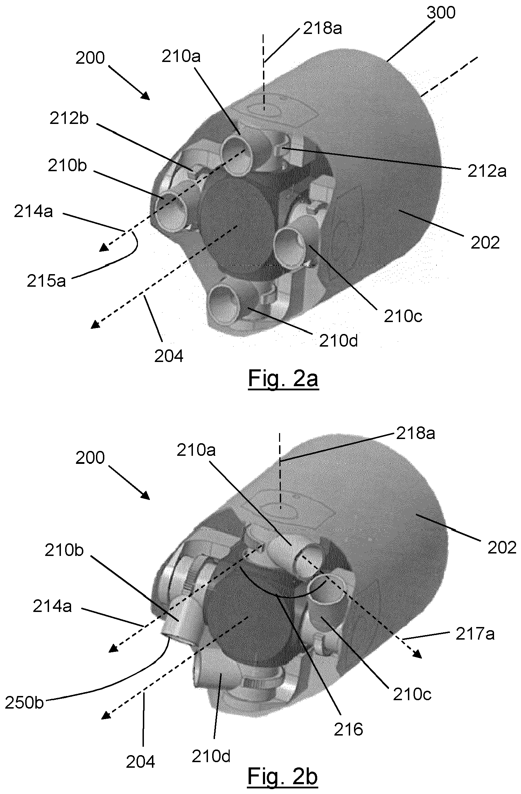

Figure 2a shows a perspective view of a nozzle assembly 200 in a maximum axial thrust configuration, according to a first embodiment of the invention.

The nozzle assembly 200 comprises a casing 202. The casing 202 is provided with an opening 300 at its back end. This opening 300 receives exhaust gases from an air vehicle the assembly 200 is mounted to, in use.

There are four nozzles 210a, 210b, 210c, 210d rotatably mounted to a front end of the casing 202. Each nozzle 210 is equally spaced around the perimeter of the front end of the casing 202. A central axial axis 204 is defined through the centre of the casing 202 and the assembly 200. This axis 204 corresponds to the air vehicle axis, when mounted on the air vehicle.

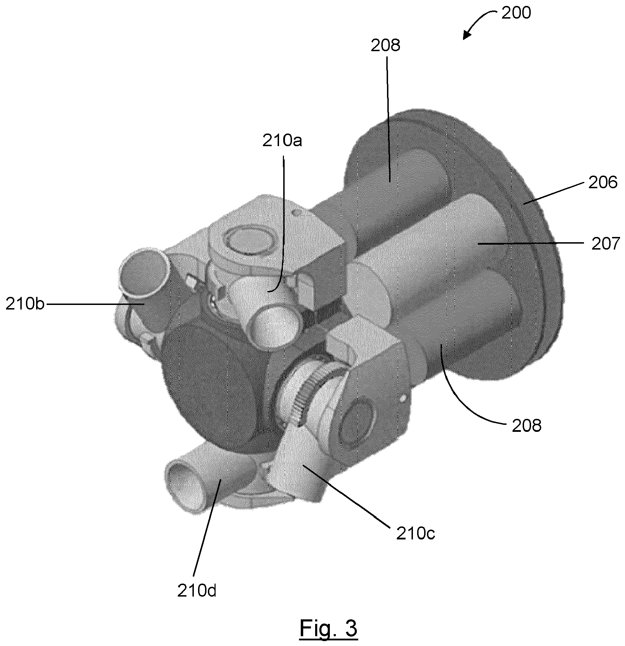

The first nozzle 210a is provided with an externally toothed gear 212a on a rearward facing portion. The toothed gear 212a is configured to engage with a corresponding gear of a servo motor (208 - shown in Figure 3) that is housed within the casing 202. Actuation of the servo motor causes the first nozzle 210a to rotate about an axis of rotation 218a of the nozzle that passes through the centre of the toothed gear 212a. The first nozzle axis of rotation 218a is orthogonal to the central axis 204, and is also orthogonal to a first nozzle axis 215a.

In the embodiment of Figure 2a, the first nozzle axis 215a is pointing in a first direction 214a, parallel to the central axis 204, in the maximum axial thrust configuration. The nozzle 210a is able to rotate about its axis of rotation 218a by an angle of up to 90° in both directions. Hence, the nozzle axis 215a can rotate by 180°.

Each of the other nozzles 210b, 210c, 201d is substantially similar to nozzle 210a, albeit located at a different point around the casing 202 and with the axes of rotation (218b, 218c, 218d) being orientated radially in relation to the casing 202 and central axis 204 at that point.

In the assembly maximum thrust configuration of Figure 2a, each nozzle axis 215 of each of the nozzles 210a, 210b, 210c, 210d is substantially parallel to the central axis 204 and hence all the nozzle axes are substantially parallel to each other. Each nozzle trajectory axis is pointing in the first direction 214a. In this way, the net axial thrust of the nozzle assembly 200 has a direction parallel to the central axis 204, and the magnitude of the net axial thrust is substantially equal to the sum of the magnitudes of the thrusts generated at the distal end of each nozzle.

Figure 2b shows a perspective view of the nozzle assembly 200 of Figure 2a, in a minimum axial thrust configuration.

In the minimum axial thrust configuration, the first nozzle 210a has been rotated by an angle 216 of 90° from the first direction 214a to a second direction 217a. The second direction 217a is also divergent from the central axis 204 by the angle 216.

In the minimum thrust configuration, each of the nozzles 210a, 210b, 210c, 210d have been rotated by the angle 216 with respect to the central axis to point in their own second directions 217. Each of the nozzles have also been rotated by the angle 216 with respect to the first direction 214a. The amount of rotation that each nozzle can achieve is only physically limited by the casing 202.

In the minimum axial thrust configuration, the four nozzles 210 are arranged such that the net lateral thrust is substantially zero. The lateral thrust provided by first nozzle 210a is equally opposed in the opposite lateral direction by fourth nozzle 210d. The lateral thrust provided by second nozzle 210b is equally opposed in the opposite lateral direction by third nozzle 210c. The lateral direction is defined as a direction on a plane perpendicular to the central axis 204 (which is the axial direction). Therefore, the thrust of each of the four nozzles cancel each other out in the lateral direction, producing a net thrust of substantially zero in the lateral direction.

In the minimum axial thrust configuration, the net axial thrust is also substantially zero. This is because the second direction 217 of each of the nozzles 210 is substantially perpendicular to the central axis 204. This configuration acts as an 'air brake' when the nozzle assembly 200 is in use on an air vehicle, wherein the air resistance experienced by the air vehicle is not overcome by the net axial thrust, thus decelerating the air vehicle. This is particularly beneficial when the air vehicle is required to perform quick and tight manoeuvres, or needs to be slowed down or stopped.

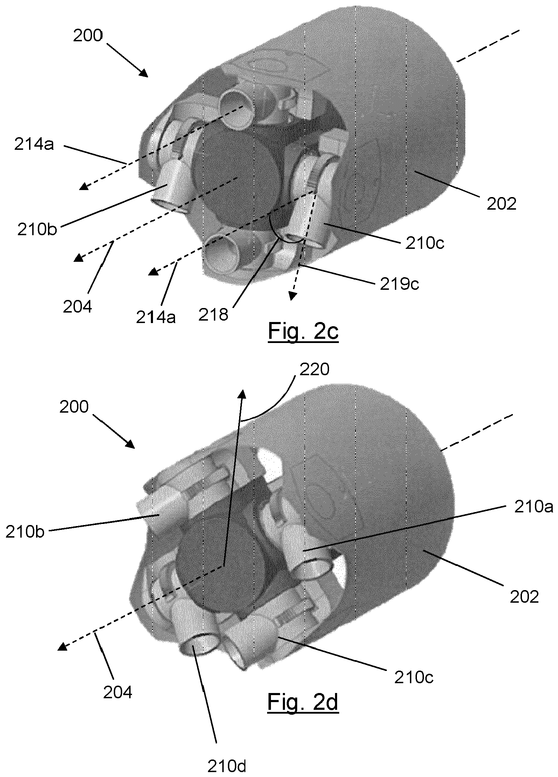

Figure 2c shows a perspective view of the nozzle assembly 200 of Figure 2a in a maximum upwards thrust configuration;

In the maximum upwards thrust configuration of Figure 2c, the third nozzle 210c has been rotated from its first direction 214c of Figure 2a to a third direction 219c. The angle 218 by which the third nozzle 210c has been rotated is 90°. The second nozzle 210b has also been rotated in the same direction and by the same angle 218 as the third nozzle 210c.

The first 210a and fourth 210d nozzles have not been rotated from the positions in Figure 2a, and their respective nozzle axes 215a, 215d are parallel to the first direction 214 and the central axis 204.

Therefore, the only nozzles providing significant magnitudes of axial thrust parallel to the central axis 204 are the first 210a and fourth 210d nozzles. Thus, in comparison to the maximum axial thrust configuration of Figure 2a, the net axial thrust of the maximum upward thrust configuration of Figure 2c is substantially half.

The second 210b and third 210c nozzles are pointing in the same direction as each other in a downwards direction (at 90° to the central axis 204). The total magnitude of the upward thrust provided by the second 210b and third 210c nozzles is substantially the same as the total magnitude of the forward thrust provided by the first 210a and fourth 210d nozzles.

Figure 2d shows a perspective view of the nozzle assembly 200 of Figure 2a in a maximum upwards and sideways thrust configuration;

In the maximum upwards and sideways thrust configuration of Figure 2d, each of the four nozzles 210 have been rotated from the first direction 214. The first 210a and fourth 210d nozzles are pointing in a downwards lateral direction. The second 210b and third 210c nozzles are pointing in a left direction. All nozzles 210 are at 90° to the central axis 204.

The net direction of the four nozzles is thrust vector 220, in a direction that is both upwards (i.e. opposite to the downwards angle of first 210a and fourth 210d nozzles) and to the right (i.e. opposite to the left facing angle of second 210b and third 210c nozzles). There is substantially zero axial thrust.

Advantageously, when a maximum 'air brake' is desired, while maximum lateral thrust is also required, the configuration of Figure 2d is optimal. This is because it provides substantially zero axial thrust, while providing a maximum lateral thrust.

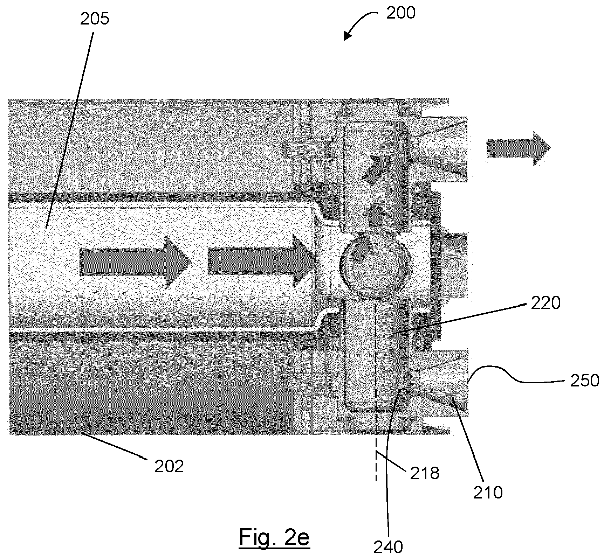

Figure 2e shows a cross-sectional side view of the nozzle assembly 200 of Figure 2a.

Here, a central plenum 205 of the nozzle assembly 200 is shown. This central plenum receives exhaust gases from the opening 300. The exhaust gases in the central plenum 205 are directed into nozzle chambers 220, one for each of the nozzles 210.

The four nozzle chambers 220 are connected to the relevant nozzle 210 and rotate with the nozzle 210 as it is independently rotated (independently from the other nozzles 210 and their toothed gears 212) rotated by its toothed gear 212. As the nozzles 210 are located and orientated orthogonally to the axis of the relevant chamber 220, rotation of each nozzle 210 rotates the orientation of the nozzle 210 but does not adjust the orientation (i.e. the direction of the relevant nozzle chamber axis) of the relevant nozzle chamber 220.

This Figure also shows the nozzle entrance 240 and nozzle exit 250 for one of the nozzles 210.

Figure 3 shows a perspective cut-away internal view of the nozzle assembly 200 of Figures 2a to 2d, with the casing 202 removed.

Here, the location 206 of the control and drive electronics is shown. In addition, one of two thermal batteries 207, used to power the control system is shown. Further, two of the four servo motors 208 are shown, the servo motors 208 being used to power movement of the toothed gears 212.

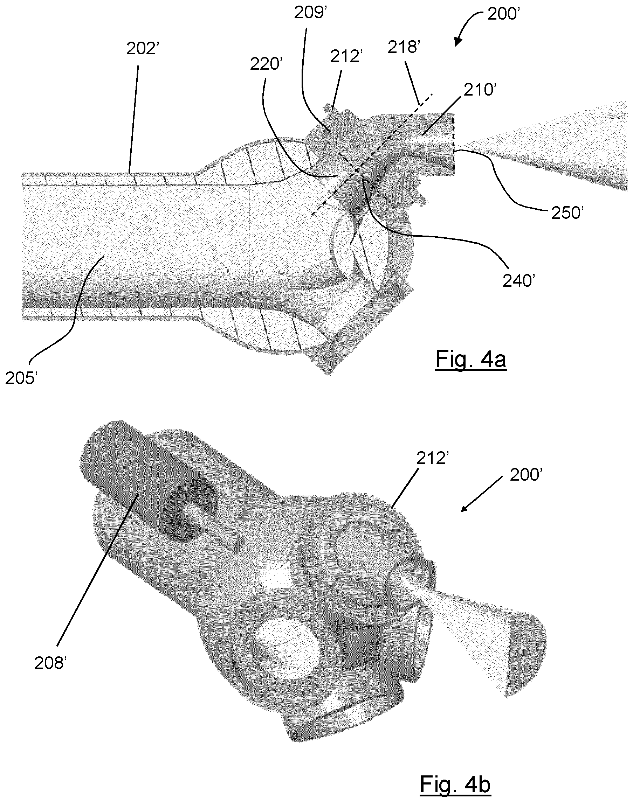

Figure 4a shows a cross-sectional side view of a nozzle assembly 200', according to a second embodiment of the invention.

Compared to the first embodiment, similar elements will be references with like reference numerals, followed by a '. Only significant differences from the first embodiment will be described.

Here, the central plenum 205' runs through the casing 202' and leads to a spherical end piece, upon which the four nozzles 210' are mounted.

Each nozzle 210' is angled such that the entrance 240' to the nozzle is angled to the exit 250'. Hence, the nozzle axis at the entrance 240' is different to the nozzle axis at the exit 250'. The axis of rotation 218' of each nozzle is parallel to the nozzle axis at the entrance 240' (but not the exit 250').

A nozzle chamber 220' (that does not rotate in relation to the casing 202') leads from the central plenum 205' to the entrance of the nozzle 240'.

The nozzle 210' is rotatably mounted (by bearings) within a circular channel 209' on the end piece of the casing 202'. The toothed ring gear 212' of each nozzle sits on top of and surrounding the circular channel 209'. The rotation of the toothed ring gears 212' are controlled by an actuator motor 208', shown in Figure 4b.

In this example, rotation of the toothed ring gear 212' rotates the nozzle 210' about its axis of rotation 218', i.e. about its entrance nozzle axis. This does not cause the nozzle axis at the entrance 240' to change but does cause the exit nozzle axis to rotate and hence, change the orientation of the nozzle axis at the nozzle exit 250'.

In use on an air vehicle, for both embodiments, exhaust gases are fed to the opening and into the central plenum, and then passed to the nozzle chambers and exhausted through the nozzles.

To change the direction, or amount of thrust provided by the nozzles, these can be rotated using the motors and toothed ring gears. Hence, the air vehicle can change direction and/or speed.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

Any suitable angle of nozzle deflection may be used. In particular, it is noted that any nozzle angle deflection that can provide substantially zero thrust (compared to a maximum thrust position), i.e. a deflection angle of substantially 90 degrees, is particularly useful.

Any suitable number of nozzles, thermal batteries and motors may be employed.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

It should be noted that throughout this specification, "or" should be interpreted as "and/or".

## Claims

1. An exhaust nozzle assembly for an air vehicle, the exhaust nozzle assembly comprising:
i) an assembly body, defining one or more openings for receiving exhaust gases into the assembly body, and
ii) a plurality of nozzles mounted on the assembly body and in fluid connection with the one or more openings, such that each nozzle is arranged to receive exhaust gases at an entrance of the nozzle, and exhaust those exhaust gases from an exit of the nozzle, and wherein each nozzle defines a nozzle axis extending from the nozzle entrance to the nozzle exit, and wherein each nozzle is arranged to direct the received exhaust gases in a direction corresponding to the nozzle axis at the exit of the nozzle,
wherein at least one of the plurality of nozzles is rotatably mounted to the assembly body and rotatable with respect to the assembly body between a first position and a second position, wherein a variation of the angle of the nozzle axis at the exit of the rotatably mounted nozzle, between the first and second positions, is at least 25 degrees.

2. An exhaust nozzle assembly as claimed in claim 1, wherein the variation of the angle of the nozzle axis at the exit of the rotatably mounted nozzle, between the first and second positions, is at least 45 degrees, 60 degrees, 70 degrees, or more preferably at least 80 degrees, 90 degrees, 120 degrees or 150 degrees, or substantially 180 degrees.

3. An exhaust nozzle assembly as claimed in any preceding claim, wherein the nozzle has a maximum thrust position and wherein the first position is on one side of the maximum thrust position and the second position is on an opposite side of the maximum thrust position, and preferably wherein the first position is at a first angle to the maximum thrust position and wherein the second position is substantially at the first angle to the maximum thrust position.

4. An exhaust nozzle assembly as claimed in any preceding claim, wherein the rotatably mounted nozzle is rotatably mounted about an axis of rotation and wherein the axis of rotation of the nozzle is transverse to the nozzle axis, and preferably wherein the axis of rotation of the nozzle is substantially orthogonal to the nozzle axis.

5. An exhaust nozzle assembly as claimed in any preceding claim, wherein the rotatably mounted nozzle is rotatably mounted about a single axis of rotation.

6. An exhaust nozzle assembly as claimed in any preceding claim, wherein the rotatably mounted nozzle is rotatably mounted about an axis of rotation and wherein the rotatably mounted nozzle is symmetrical such that it is rotationally symmetrical about the axis of rotation of the nozzle.

7. An exhaust nozzle assembly as claimed in any preceding claim, wherein at least two of the plurality of the nozzles is rotatably mounted to the assembly body and rotatable with respect to the assembly body between a first position and a second position, wherein a variation of the angle of the nozzle axis at the exit of each rotatably mounted nozzle, between the first and second positions, is at least 25 degrees, and preferably wherein the plurality of rotatably mounted nozzles are rotatably moveable independently of each other.

8. An exhaust nozzle assembly as claimed in claim 7, comprising four such rotatably mounted nozzles; a first nozzle being rotatably mounted about a first axis of rotation, a second nozzle being rotatably mounted about a second axis of rotation, a third nozzle being rotatably mounted about a third axis of rotation, and a fourth nozzle being rotatably mounted about a fourth axis of rotation, wherein the first and third axes of rotation are substantially parallel to each other and wherein the second and fourth axes of rotation are substantially parallel to each other and wherein the first and third axes are substantially orthogonal to the second and fourth axes.

9. An exhaust nozzle assembly for an air vehicle, the exhaust nozzle assembly comprising:
i) an assembly body, defining one or more openings for receiving exhaust gases into the assembly body, and
ii) a plurality of nozzles mounted on the assembly body and in fluid connection with the one or more openings, such that each nozzle is arranged to receive exhaust gases at an entrance of the nozzle, and exhaust those exhaust gases from an exit of the nozzle, and wherein each nozzle defines a nozzle axis extending from the nozzle entrance to the nozzle exit, and wherein each nozzle is arranged to direct the exhaust gases received in a direction corresponding to the nozzle axis at the exit of the nozzle,
wherein the plurality of nozzles comprises at least four nozzles, each rotatably mounted to the assembly body and rotatable with respect to the assembly body between a first position and a second position.

10. An exhaust nozzle assembly for an air vehicle, the exhaust nozzle assembly comprising:
i) an assembly body, defining one or more openings for receiving exhaust gases into the assembly body, and
ii) a plurality of nozzles mounted on the assembly body and in fluid connection with the one or more openings, such that each nozzle is arranged to receive exhaust gases at an entrance of the nozzle, and exhaust those exhaust gases from an exit of the nozzle, and wherein each nozzle defines a nozzle axis extending from the nozzle entrance to the nozzle exit, and wherein each nozzle is arranged to direct the exhaust gases received in a direction corresponding to the nozzle axis at the exit of the nozzle,
wherein at least one of the plurality of nozzles is rotatably mounted to the assembly body and rotatable with respect to the assembly body about an axis of rotation and wherein the axis of rotation is substantially orthogonal to the nozzle axis.

11. An air vehicle comprising the exhaust nozzle assembly as claimed in any preceding claim, preferably wherein the air vehicle is an autonomous air vehicle, such as a rocket or munition.

12. A method of manufacturing or controlling an air vehicle including the step of providing an exhaust nozzle assembly as claimed in any of claims 1 to 10.

13. A method of controlling an air vehicle comprising the steps of:
i) providing an air vehicle with a nozzle, the nozzle receiving exhaust gases from an engine of the air vehicle,
ii) exhausting the exhaust gases from an exit of the nozzle, when the nozzle is in a first position,
iii) rotating the nozzle from the first position to a second position, through an angle of at least 25 degrees, and
iv) exhausting the exhaust gases from the exit of the nozzle, when the nozzle is in the second position.

14. A method of controlling an air vehicle comprising the steps of:
i) providing an air vehicle having at least four nozzles, each of the four nozzles receiving exhaust gases from an engine of the air vehicle,
ii) exhausting the exhaust gases from an exit of each of the four nozzles, when each nozzle is in a first position,
iii) rotating each nozzle from its first position to a second position, and
iv) exhausting the exhaust gases from the exit of each of the four nozzle, when each nozzle is in its second position.

15. A method of controlling an air vehicle comprising the steps of:
i) providing an air vehicle with a nozzle, the nozzle receiving exhaust gases from an engine of the air vehicle,
ii) exhausting the exhaust gases from an exit of the nozzle, when the nozzle is in a first position,
iii) rotating the nozzle from the first position to a second position, about an axis of rotation that is substantially orthogonal to a nozzle axis, and
iv) exhausting the exhaust gases from the exit of the nozzle, when the nozzle is in the second position.
